# EUROPÄISCHE PATENTANMELDUNG

(11) **EP 0 984 210 A2**
(43) Veröffentlichungstag der Anmeldung: **08.03.2000**
(21) Anmeldenummer: 99890243.1
(22) Anmeldetag: 21.07.1999
(51) Int. Cl.: F16H 61/30

(54) **Vorrichtung zur Unterstützung der Drehbewegung einer Welle**

(30) Priorität: 26.08.1998 AT 144998
(71) Anmelder: HYGRAMA AG, CH-6343 Rotkreuz (CH)
(72) Erfinder: Dörfler, Erich, Dipl.-Ing., 86925 Leeder (DE)
(74) Vertreter: Laminger, Norbert, Mag.

(57) **Zusammenfassung**

Eine Vorrichtung zur Unterstützung der Drehbewegung einer Welle, insbesondere zur Schaltunterstützung für manuelle Getriebe, ist mit einem manuell zu betätigenden Schalthebel (S), der mittelbar auf die Welle einwirkt, zumindest einem druckmittelbetätigten Arbeitszylinder (7, 8), der auf das Schaltgestänge unterstützend einwirkt, und zumindest einer Einrichtung zur Ermittlung der Betätigung des Schalthebels, die den Arbeitszylinder ansteuert, versehen. Um eine baulich nicht aufwendige Schaltunterstützungsvorrichtung zu schaffen, die bei möglichst guter Charakteristik im Betrieb auch den Notbetrieb bei Ausfall der Unterstützung nicht beeinträchtigt und die vorzugsweise auch für die Nachrüstung bestehender Systeme und Getriebe geeignet ist, weist das Schaltgestänge eine Drehwelle (6) auf, die über ein parallel aber exzentrisch zur Drehwelle (6) verlaufendes Verbindungsstück mit einem Getriebehebel verbunden ist, an dessen einem Ende mittelbar der Schalthebel (S) angreift und dessen anderes Ende mit zumindest einem schaltbares Steuerventil (12, 13) für den Arbeitszylinder (7, 8) in Wirkverbindung steht.

## Beschreibung

Die Erfindung betrifft eine Vorrichtung zur Unterstützung der Drehbewegung einer Welle, insbesondere zur Schaltunterstützung für manuelle Getriebe, insbesondere für Zahnradwechselgetriebe von Kraftfahrzeugen, speziell von Nutzfahrzeugen, mit einem manuell zu betätigenden Schalthebel, der mittelbar auf die Welle und insbesondere auf Schaltgabeln im Wechselgetriebe einwirkt, zumindest einem druckmittelbetätigten Arbeitszylinder, der auf das Schaltgestänge unterstützend einwirkt, und zumindest einer Einrichtung zur Ermittlung der Betätigung des Schalthebels, die den Arbeitszylinder ansteuert.

Eine spezielle Anwendung für die Unterstützung der Drehbewegung einer Welle ist die Schaltunterstützung von manuellen Wechselgetrieben. Für die Schaltunterstützung manuell geschalteter Getriebe gibt es mehrere bekannte Lösungen. Meist ist die Schaltunterstützung fest mit dem Getriebe verbunden und die Trennung von Dreh- und Querbewegung wird durch Nutensteine, Hohl- und Keilwellen od. dgl. erreicht. Ein erster Hebel im Gehäuseinneren leitet die Kräfte auf das Ventil und ein anderer Hebel leitet daraufhin die erzeugte Kraft des Servozylinders in das Getriebe. Bei einer anderen bekannten Ausführungsform wird das Schaltgestänge direkt auf das Ventil geleitet und die Entkoppelung zwischen Dreh- und Querbewegung erfolgt erst anschliessend. Über ein Schiebemuffe und einen zusätzlichen Hebel wird die Querbewegung übertragen.

Bei der relativ aufwendigen Schaltvorrichtung der W097/15768 ist der Schalthebel über ein Gestänge mit einer Steuerstange in der Kolbenstange eines Servozylinders verbunden, der die Schaltkräfte proportional verstärkt in das Getriebe überträgt. Durch unterschiedliche Ventilkennlinien und/oder unterschiedliche geometrische Abmessungen der Oberflächen des Kolbens im Servozylinder können unterschiedliche Schaltkräfte erzielt werden.

Bei der Getriebeschaltvorrichtung der EP 0 809 048 ist der Schalthebel über einen Kabelzug mit dem Getriebehebel verbunden, welcher über einen doppeltwirkenden Arbeitszylinder betätigt wird. Für den Schaltvorgang werden die Kräfte auf den Schalthebel und Motor- sowie Kupplungsdaten berücksichtigt und beeinflussen die Ansteuerung des Arbeitszylinders.

In der DE-0S 29 27 666 ist eine Schaltunterstützung beschrieben, bei der eine relative Verdrehung eines Getriebehebels und der Drehwelle über einen inneren Hebelarm auf eine Steuerventilanordnung übertragen wird. Diese Ausführung bedarf einer speziellen Ausbildung der Verbindung von Getriebehebel und Drehwelle sowie des Getriebehebels selbst (integrierte Steuerventile), sodaß sie kompliziert in der Herstellung und für Nachrüstungen kaum geeignet ist.

Auch bei der EP-A-0 251 807 wird aus dem Unterschied zwischen der Bewegung des Schalthebels und der Bewegung der Drehwelle eine Betätigungsbewegung eines Steuerventils abgeleitet. Wieder ist keine exzentrische Verbindung von Drehwelle und einem Getriebehebel vorgesehen, der die Steuerventile betätigt.

Bei der Anordnung der DE-0S 1 625 145 und der vom Schaltprinzip her gleichartigen US-PS 3,628,403 wird die Bewegung eines Schalthebels in Schaltrichtung zur Betätigung eines Steuerventils genutzt, die bei einem elastisch gelagerten Schalthebel bei zu hohen Schaltkräften und dadurch fehlender Drehbewegung der ortsfest gelagerten Drehwelle erfolgt. Dieser Vorhalt scheint Ihrer gegenständlichen Erfindung am nächsten zu kommen, unterscheidet sich aber davon durch die nicht mittelbare Anlenkung des Schalthebels und die auf einer Seite bezüglich des Drehpunktes des Getriebehebels angeordneten Verbindung zur Drehwelle als auch Angriffspunkte an den Schaltventilen.

Die US-PS 2,926,539 hat eine Schaltvorrichtung zum Gegenstand, bei der die Bewegung des Schalthebels über eine Welle in eine Betätigungbewegung eines Steuerventils umgesetzt wird. Das Steuerventil steuert dann einen Aktuator an, welcher die Schaltbewegung einer wiederum insgesamt ortsfesten zweiten Drehwelle bewirkt.

Ähnlich funktioniert auch die Schaltvorrichtung der US-PSen 3,035,102 und 3,074,291, bei welchen die Schaltbewegung des Schalthebels zur Betätigung von Schaltventilen führt, welche dann Schaltaktuatoren zur Verdrehung der eigentlichen und wiederum vollständig ortsfesten Drehwelle ansteuern.

Das Ziel der vorliegenden Erfindung war eine baulich nicht aufwendige Vorrichtung zur Unterstützung einer Drehbewegung einer Welle, speziell eine Schaltunterstützungsvorrichtung, die bei möglichst guter Charakteristik im Betrieb auch den Notbetrieb, insbesondere die Notschaltbarkeit eines Getriebes, bei Ausfall der Unterstützung nicht beeinträchtigt und die vorzugsweise auch für die Nachrüstung bestehender Systeme und Getriebe geeignet ist.

Dieses Ziel wird erfindungsgemäß dadurch erreicht, daß das Schaltgestänge eine Drehwelle aufweist, die über ein parallel aber exzentrisch zur Drehwelle verlaufendes Verbindungsstück mit einem Getriebehebel verbunden ist, an dessen einem Ende mittelbar der Schalthebel angreift und dessen anderes Ende mit zumindest einem schaltbaren Steuerventil für den Arbeitszylinder in Wirkverbindung steht. Jede Betätigung des Schalthebels führt zu einer Verschwenkung des mit der Drehwelle schwenkbar verbundenen Getriebehebels, da der Schaltwiderstand im Getriebe eine Verdrehung der Drehwelle selbst vorerst entgegenwirkt. Durch die Verbindung des Getriebehebels mit zumindest einem Steuerventil kann er das Absperrelement des Steuerventils für den unterstützenden Arbeitszylinder betätigen, worauf dieser Arbeitszylinder dann zur Unterstützung der Schaltbewegung auf die Drehwelle einwirkt. Ohne aufwendige Sensoren oder ähnliche elektronische Vorrichtungen wird damit einfach, automatisch und weitestgehend gesichert gegen Ausfälle und Fehlfunktionen eine Schaltbewegung zur Betätigung des diese Schaltbewegung unterstützenden Arbeitszylinders genutzt. Damit ergibt sich bei einfacher Veränderung des Systems eine Konstruktion mit im wesentlichen linearer Verstärkung der Schaltkräfte am Schalthebel. Durch den Anbau der beschriebenen Anordnung ohne Veränderung oder Modifikation des Schaltgestänges von Schalthebel bis Getriebehebel und von Drehwelle bis Schaltausleger ist die Nachrüstung auch bestehender Getriebe in einfacher Weise möglich. Sollte das System trotz allem ausfallen, bleibt der Kraftfluß zwischen Schalthebel und Mitnehmerfinger unverändert und gewährleistet so die sichere Notschaltbarkeit des Getriebes.

Vorzugsweise ist für die Schaltunterstützung sowohl des Hoch- als auch Zurückschaltens vorgesehen, daß zwei Steuerventile symmetrisch zur Drehwelle und in einer Linie, parallel und vorzugsweise im Fall der Steuerventile, koaxial mit der Linie der Schwenkbewegung des Getriebehebels vorgesehen sind. Damit kann die Drehwelle bei ihrer Verschwenkung unmittelbar auf die Steuerventile einwirken und auch der Arbeitszylinder muß nicht über kraftverzehrende Umlenkmechanismen auf die Drehwelle einwirken.

Um die baulichen Eingriffe in das Schaltgestänge zu minimieren und die Unterstützungskräfte auf das System und dessen Komponenten optimal abstimmen zu können, ist bei Systemen mit einem im wesentlichen radialen Servohebel, über welchen der oder jeder Arbeitszylinder auf die Drehwelle einwirkt, das Verbindungsstück gemäß einem weiteren Merkmal der Erfindung drehbar in den Servohebel eingesetzt.

Vorteilhafterweise ist dabei vorgesehen, daß das Verbindungsstück radial näher zur Drehwelle am Servohebel ansetzt als der oder jeder Arbeitszylinder.

Nachdem für den Wechsel unterschiedlicher Gänge auch unterschiedliche Kräfte notwendig sind, ist zur daran angepaßten Unterstützung gemäß einem weiteren Merkmal der Erfindung vorgesehen, daß die Drehwelle mittels des Schalthebels axial verschiebbar ist, und daß der Servohebel um eine senkrecht zur Achse der Drehwelle verlaufende Achse verschwenkbar ist, während der oder die Arbeitszylinder ortsfest angebracht sind. Je nach der gewählten Schaltgasse, welche einer bestimmten axialen Verschiebung der Drehwelle entspricht, verändert sich der Winkel der Servohebels zur Achse der Drehwelle, damit auch seine wirksame Länge und somit das vom Arbeitszylinder ausgeübte Drehmoment.

Gemäß einer bevorzugten Ausführungsform ist vorgesehen, daß der Getriebehebel über ein drehbar eingesetztes Verbindungsstück mit einer Drehhebel-Anordnung in Verbindung steht, an welcher Drehhebel-Anordnung auf der dem Verbindungsstück entgegengesetzten Seite der Schalthebel mittelbar angreift. Vorzugsweise ist die Drehachse der Drehhebel-Anordnung koaxial zur Drehwelle. Durch diese Ausführung mit verstärkt durch Reibung gedämpfter Bewegung kann die erfindungsgemäße Konstruktion im Bereich der verdrehbaren Verbindungsstücke stabilisiert werden und auch die Verstärkung der Schaltkräfte kann durch geeignete Abstimmung der Hebelverhältnisse freier bestimmt werden.

Um zusätzlich zu den oben genannen Vorteilen auch jene der hydraulischer Übertragung der Schaltbewegung vom Schalthebel zum Getriebe nutzen zu können, ist gemäß einem weiteren Merkmal der Erfindung vorgesehen, daß am Getriebehebel ein hydraulischer Arbeitszylinder eines hydraulischen Schaltsystems angreift.

Vorteilhafterweise ist dabei vorgesehen, daß zusätzlich ein weiterer hydraulischer Arbeitszylinder des hydraulischen Schaltsystems axial auf die Drehwelle einwirkt.

Speziell für Nutzfahrzeuge ist die einfache Anbindung an deren ohnehin vorhandenes Druckluftsystem möglich, wenn pneumatische Arbeitszylinder zur Unterstützung der Schaltbewegung vorgesehen sind.

Um dabei ein sicheres und rasches Ansprechen zu gewährleisten, sind erfindungsgemäß pneumatische, vorzugsweise proportionale Sitzventile mit geringem Hub zur Ansteuerung des oder jedes Arbeitszylinders vorgesehen, welche über ein elastisches Element, vorzugsweise eine Schraubenfeder, geschlossen gehalten sind. Damit ist, insbesondere bei zwei einander gegenüberliegenden Ventilen, der Getriebehebel in der neutralen Stellung, bei der der Schalthebel nicht betätigt ist, zwischen den Betätigungselementen der Ventile zentriert und schwingungsgedämpft gehalten, welche Wirkung allenfalls durch separate Zentrierelemente, beispielsweise weitere Federelemente, verstärkt werden könnte.

Um aufwendige Dichtstellen möglichst zu verringern, den baulichen Aufwand gering zu halten und die Bauteile gegen Verschmutzung zu schützen, sind vorteilhafterweise das oder jedes Steuerventil, vorzugsweise auch der oder jeder Arbeitszylinder, in einem gemeinsamen Gehäuse angeordnet, welches auch die Lager für die Drehwelle beinhaltet und vorzugsweise mit dem auf dem Getriebegehäuse aufgeflanschten Schaltauslegergehäuse verbunden ist.

Eine wenig aufwendige Konstruktion kann dadurch erreicht werden, daß das mechanische Schaltgestänge am Kolben zumindest eines Arbeitszylinders angreift.

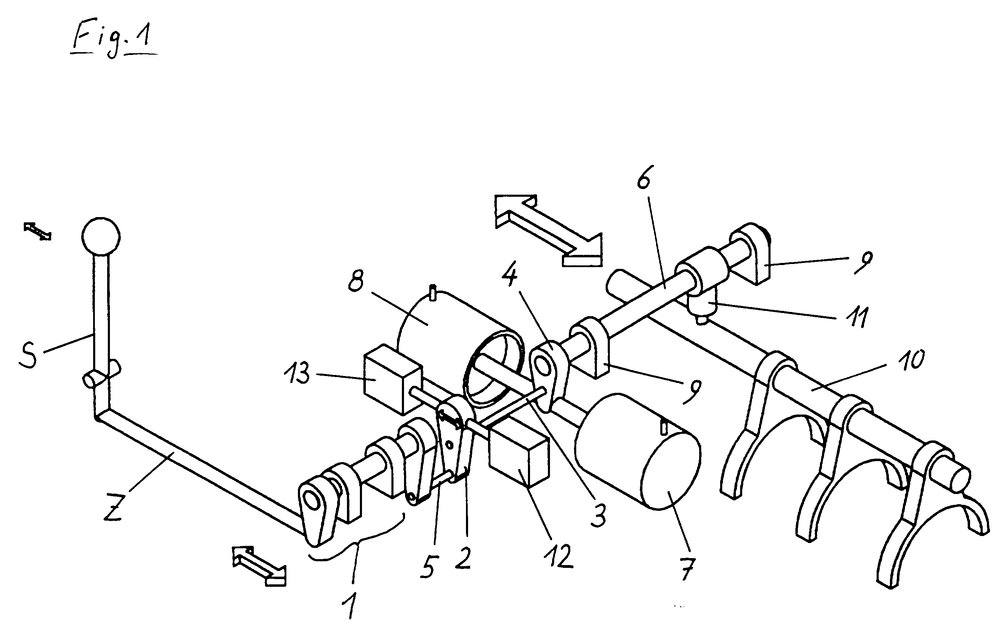

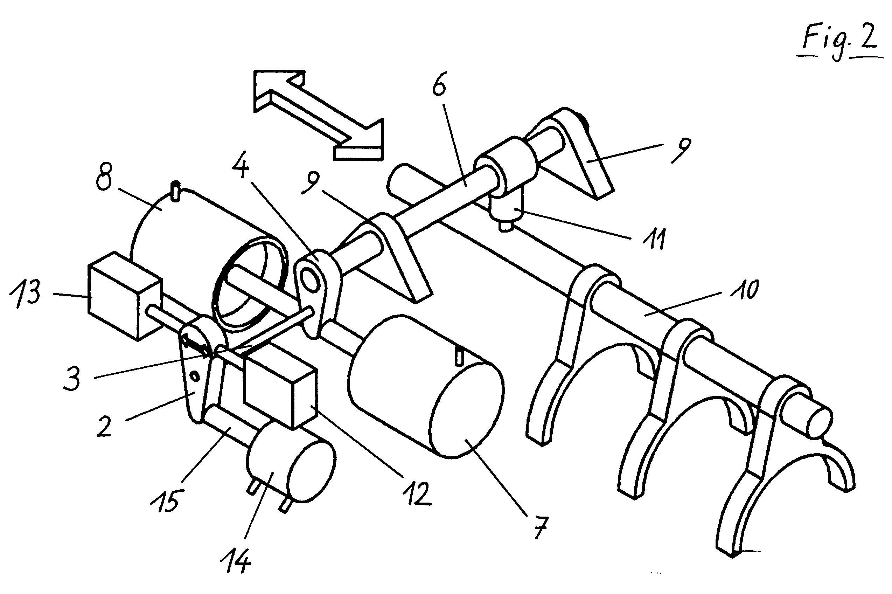

In der nachfolgenden Beschreibung soll ein bevorzugtes Ausführungsbeispiel der Erfindung anhand der beigefügten Zeichnungen näher erläutert werden. Dabei zeigt die Fig. 1 eine schematische perspektivische Ansicht des Innenaufbaus der Vorrichtung und der Verbindung mit dem Schaltgestänge, und Fig. 2 eine schematische perspektivische Ansicht einer weiteren Ausführungsform mit hydraulischer Übertragung der Schaltbewegung.

Die erfindungsgemäße Vorrichtung zur Schaltunterstützung für jede Art von manuell betätigten Wechselgetrieben, speziell für Zahnradwechselgetriebe für den Einsatz in stationären Anlagen und vorzugsweise in Kraftfahrzeugen, insbesondere in Nutzfahrzeugen, ist in Fig. 1 in einer bevorzugten Ausführungsform dargestellt. Natürlich kann die erfindungsgemäße Vorrichtung auch baulich in das Getriebe integriert werden. Wenn die erfindungsgemäße Vorrichtung in einem separaten Gehäuse untergebracht ist, vorzugsweise im Falle der Nachrüstung bestehender Getriebe, erfolgt die Verbindung mit dem Gehäuse des Getriebes vorteilhafterweise im Bereich des Schaltauslegergehäuses der Vorrichtung. Die eigentlich funktionellen Bauteile der erfindungsgemäßen Vorrichtung, insbesondere der Getriebehebel und seine Verbindungsstücke, der oder jeder die Schaltbewegung unterstützende Arbeitszylinder und dessen Steuerventile befinden sich vorteilhafterweise eingekapselt in einem gemeinsamen Gehäuse. Dieses Gehäuse kann unterteilt sein, wobei symmetrisch zur Drehwelle und koaxial die beiden Ventilgehäuse für die Steuerventile vorgesehen sind, denen als Arbeitsfluid für den oder jeden im Zylindergehäuse untergebrachten Arbeitszylinder vorzugsweise Druckluft über einen Anschluß zugeführt werden kann. Am Schaltauslegergehäuse kann dabei ein Befestigungsflansch mit den Bohrungen für die Befestigungsschrauben vorhanden sein.

Der innere Aufbau der erfindungsgemäßen Vorrichtung in einer ersten Ausführungsform ist schematisch in Fig. 1 dargestellt, ebenso wie die Anbindung an den Schalthebel S über ein dazwischenliegendes, hier beispielhaft aus nur einem geraden Abschnitt bestehendes Schaltgestänge Z, das über eine Drehhebel-Anordnung 1 an einem Getriebehebel 2 angreift. Dieser Getriebehebel 2 ist auf einem Verbindungsstück 3 zu einem Servohebel 4 drehbar gelagert und it der Drehhebel-Anordnung 1 ebenfalls über ein in dieser Anordnung 1 und im Getriebehebel 2 drehbar gelagertes Verbindungsstück 5 verbunden.

Der Servohebel 4 ist drehfest mit einer Drehwelle 6 verbunden und auch Angriffspunkt zweier die Schaltbewegung unterstützender pneumatischer Arbeitszylinder 7 und 8. Diese Drehwelle 6 ist zwischen dem Servohebel 4 und ihrem gegenüberliegenden, im Lager 9 drehbar und allenfalls axial verschiebbar gelagerten Ende mit einem auf den Träger 10 der Schaltgabeln des Wechselgetriebes einwirkenden Mitnehmerfinger 11 versehen. Typischerweise liegt die Drehwelle 6 quer zur Längsachse des Getriebes, sodaß eine axiale Verschiebung dieser Drehwelle 6, um bei entsprechender Bewegung des Schalthebels S zur Wahl unterschiedlicher, parallel nebeneinanderliegender Schaltgassen, diese Bewegung auch der Drehwelle 6 mitteilen zu lassen, eine Verschiebung quer zum Getriebe und dessen Gehäuse ist. Der Mitnehmerfinger 11 ist auf der Drehwelle 6 drehfest montiert.

Angesteuert werden die Arbeitszylinder 7 und 8, welche das Einlegen der Gänge unterstützen, durch zwei zugeordnete Steuerventile 12 und 13, beispielsweise herkömmliche Sitzventile. Diese liegen in Richtung der Drehbewegung des Getriebehebels 2 und vorzugsweise in einer Linie fluchtend, symmetrisch zum Getriebehebel 2, der die Ventile 12, 13 beispielsweise über Stössel oder ähnliche Betätigungselemente betätigt.

Sobald der Schalthebel S bewegt wird, erfolgt über das Zwischengestänge Z und die Drehhebel-Anordnung 1 sowie das Zwischenstück 5 eine Krafteinleitung am Getriebehebel 2. Durch den Schaltwiderstand im Getriebe bleibt die Drehwelle 6 vorerst fixiert, ebenso der Servohebel 4, so daß der Getriebehebel 2 dadurch um eine vom Verbindungsstück 3 gebildete Achse verdreht wird und dabei eines der beiden Steuerventile 12, 13 betätigt. Das betätigte Steuerventil 12 oder 13 steuert daraufhin den zugeordneten Arbeitszylinder 7 oder 8 mit einem Druck an, welcher der über den Getriebehebel 2 eingeleiteten Kraft, d.h. auch der am Schalthebel S aufgewandten Kraft, proportional ist. Der Arbeitszylinder 7 oder 8 verdreht daraufhin den Servohebel 4 und damit die Drehwelle 6 im gewünschten Schaltsinn. Die dabei auftretenden Kräfte sind immer den auf den Schalthebel S ausgeübten Kräften proportional, unabhängig vom momentanen Verdrehwinkel der Drehwelle 6. Erst wenn am Schalthebel S keine Kraft mehr wirkt, wird der Getriebehebel 2 zwischen den Steuerventilen 12, 13 durch allfällige Zentrierfedern oder ähnliche Vorrichtungen in die Neutralposition geschoben. Der Schaltvorgang ist damit abgeschlossen.

Nachdem die zum Einlegen der Gänge notwendige Kraft meist abhängig von der gewählten Schaltgasse ist, ist es von Vorteil, wenn die unterstützende Kraft der Arbeitszylinder 7, 8 auf diese unterschiedlichen Betätigungskräfte abgestimmt werden kann. Dazu ist vorteilhafterweise vorgesehen, daß der Servohebel 4 zwar drehfest, aber um eine quer zur Drehwelle 6 verlaufende Achse verschwenkbar an der Drehwelle 6 montiert ist. Je nach dem Ausmaß der axialen Verschiebung der Drehwelle 6, d.h. je nach mit dem Schalthebel S gewählter Schaltgasse, weist der Servohebel 4 dann eine andere wirksame Länge auf, so daß bei gleichbleibender Kraft der Arbeitszylinder die Kraft zur Schaltunterstützung unterschiedlich ist. Natürlich kann der Servohebel 4 aber auch mit immer dem selben Winkel zur Achse der Drehwelle 6 auf dieser montiert sein, wobei zur Ermöglichung der axialen Verschiebung dieser Drehwelle 9 sie durch eine Bohrung des Servohebels 4 hindurchgeführt ist. Die Verhinderung der gegenseitigen Verdrehung wird dabei beispielsweise über eine Nut-Zapfen-Anordnung bewerkstelligt, wobei vorzugsweise zumindest eine axiale Längsnut in der Drehwelle 6 und eine der Anzahl der Nuten entsprechende Anzahl von in diese Nuten eingreifenden Zapfen in der Bohrung des Servohebels 4 herausgearbeitet sind.

Anstelle von zwei einfachwirkenden Arbeitszylindern 7, 8 kann auch ein doppeltwirkender Arbeitszylinder vorgesehen sein, welcher beispielsweise symmetrisch zur Drehwelle 6 liegt und dessen Kolben mit einer Aufnahme für das äußere Ende des Servohebels 4 versehen ist.

In jedem Fall ist es durch geeignetes Abstimmen der geometrischen Verhältnisse in der erfindungsgemäßen Vorrichtung und der Kraft der Arbeitszylinder 7, 8 möglich, die Verstärkung der am Schalthebel S ausgeübten Schaltkraft um den gewünschten Faktor bis zum Mitnehmerfinger 11 auf der Drehwelle 6 zu erreichen. Das kann beispielsweise durch geeignete Wahl der Längen der Hebelarme erzielt werden. Die gewünschte Proportionalität zwischen der Betätigungskraft am Schalthebel S und der Kraft des Arbeitszylinders 7 und 8 wird durch die geometrische Anordnung von Steuerventilen 16, 17 und Arbeitszylinder 7, 8 zum Getriebehebel 2 erreicht. Bei Betätigung des Schalthebels S wird der entsprechende Arbeitszylinder 7, 8 über das Steuerventil 12, 13 mit der Druckluft beaufschlagt und erzeugt eine das Schalten unterstüztende Kraft am Servohebel 4 als auch eine Kraft, die gegen jene am Getriebehebel 2 wirkt und somit die Drehwelle 6 entgegen dem Verschwenken beim Schalten zurückdrückt, d.h. das entsprechende Steuerventil 12, 13 schließt. Erst wenn sich die Kraft am Schalthebel S und damit am Getriebehebel 2 weiter erhöht - die Drehwelle 6 also nicht zurückgedrückt, sondern gehalten oder sogar weiter im ursprünglichen Schaltsinn verschwenkt wirdbleibt das Steuerventil 12, 13 geöffnet oder wird sogar noch weiter aufgemacht, so daß durch die Unterstützung durch die Arbeitszylinder 14, 15 auch die Ausgangskraft am Mitnehmerfinger 11 auf der Drehwelle 6 gleich bleibt oder sich noch erhöht. Im Zusammenhang mit der prinzipiell frei bestimmbaren Verstärkung aufgrund der Hebelverhältnisse im Schaltgestänge ergibt sich dann in vorteilhafter Weise eine proportional der Betätigungskraft am Schalthebel S bemessene Verstärkung der Kraft am Mitnehmerfinger 11.

Die Fig. 2 zeigt schematisch eine Ausführungsform zur Verwendung mit einer hydraulischen Übertragung der Schaltbewegung vom Schalthebel S (hier nicht dargestellt) ins Getriebe. Anstelle eines mechanischen Zwischengestänges Z wie in Fig. 1 und der Drehhebel-Anordnung 1 ist ein Hydraulikzylinder 14 vorgesehen, der über ein herkömmliches hydraulisches Kraftübertragungssystem mit dem Schalthebel S in Verbindung steht. Dieser Hydraulikzylinder 14 ist in der dargestellten beispielhaften Ausführungsform über eine Kolbenstange 15 mit dem Getriebehebel 2 verbunden.

Die zwei zugeordneten Steuerventile 12 und 13 werden in der bereits beschriebenen Art und Weise bei Verdrehung des Getriebehebels 2 betätigt.

Nicht dargestellt ist die vorteilhafte Weiterausbildung des Systems der Fig. 2, wo zur Wahl der Schaltgassen ein weiterer Hydraulikzylinder vorgesehen ist, der in axialer Richtung an der Drehwelle 6 angreift und diese je nach der Schaltgassenwahl-Bewegung des Schalthebels S axial verschiebt.

Bei einer einfachen und wenig aufwendigen Ausführungsform des erfindungsgemäßen Systems kann aber auch ein mechanisches Schaltgestänge anstelle an der Drehwelle mittelbar oder unmittelbar am Kolben zumindest eines der Arbeitszylinder angreifen.

## Patentansprüche

1. Vorrichtung zur Unterstützung der Drehbewegung einer Welle, insbesondere zur Schaltunterstützung für manuelle Getriebe, insbesondere für Zahnradwechselgetriebe von Kraftfahrzeugen, speziell von Nutzfahrzeugen, mit einem manuell zu betätigenden Schalthebel (S), der mittelbar auf die Welle und insbesondere auf Schaltgabeln im Wechselgetriebe einwirkt, zumindest einem druckmittelbetätigten Arbeitszylinder (7, 8), der auf das Schaltgestänge unterstützend einwirkt, und zumindest einer Einrichtung zur Ermittlung der Betätigung des Schalthebels, die den Arbeitszylinder ansteuert, dadurch gekennzeichnet, daß das Schaltgestänge eine Drehwelle (6) aufweist, die über ein parallel aber exzentrisch zur Drehwelle (6) verlaufendes Verbindungsstück (3) mit einem Getriebehebel (2) verbunden ist, an dessen einem Ende mittelbar der Schalthebel (S) angreift und dessen anderes Ende mit zumindest einem schaltbares Steuerventil (12, 13) für den Arbeitszylinder (7, 8) in Wirkverbindung steht.

2. Vorrichtung nach Anspruch 1, dadurch gekennzeichnet, daß zwei Steuerventile (12, 13) symmetrisch zur Drehwelle (6) und in einer Linie, parallel mit der Linie der Schwenkbewegung des Getriebehebels (2) vorgesehen sind.

3. Vorrichtung nach einem der Ansprüche 1 und 2, wobei die Drehwelle mit einem im wesentlichen radialen Servohebel versehen ist, über den der oder jeder Arbeitszylinder auf die Drehwelle (6) einwirkt, dadurch gekennzeichnet, daß das Verbindungsstück (3) drehbar in den Servohebel (4) eingesetzt ist.

4. Vorrichtung nach Anspruch 3, dadurch gekennzeichnet, daß das Verbindungsstück radial näher zur Drehwelle (6) am Servohebel (4) ansetzt als der oder jeder Arbeitszylinder (7, 8).

5. Vorrichtung nach Anspruch 3 oder 4, dadurch gekennzeichnet, daß die Drehwelle (6) in an sich bekannter Weise mittels des Schalthebels (S) axial verschiebbar ist, und daß der Servohebel (4) um eine senkrecht zur Achse der Drehwelle (6) verlaufende Achse verschwenkbar ist, während der oder die Arbeitszylinder (7, 8) ortsfest angebracht sind.

6. Vorrichtung nach einem der Ansprüche 1 bis 5, dadurch gekennzeichnet, daß der Getriebehebel (2) über ein drehbar eingesetztes Verbindungsstück (5) mit einer Drehhebel-Anordnung (1) in Verbindung steht, an welcher Drehhebel-Anordnung auf der dem Verbindungsstück entgegengesetzten Seite der Schalthebel (S) mittelbar angreift.

7. Vorrichtung nach Anspruch 6, dadurch gekennzeichnet, daß am Getriebehebel (2) ein Hydraulikzylinder (14) eines hydraulischen Schaltübertragungssystems angreift.

8. Vorrichtung nach Anspruch 7, dadurch gekennzeichnet, daß zusätzlich ein weiterer Schaltzylinder, vorzugsweise ein hydraulischer Arbeitszylinder, des hydraulischen Schaltsystems axial auf die Drehwelle (6) einwirkt.

9. Vorrichtung einem der Ansprüche 1 bis 8, dadurch gekennzeichnet, daß pneumatische Arbeitszylinder (7, 8) zur Unterstützung der Schaltbewegung vorgesehen sind.

10. Vorrichtung nach Anspruch 9, dadurch gekennzeichnet, daß pneumatische, vorzugsweise proportionale Sitzventile (12, 13) mit geringem Hub zur Ansteuerung des oder jedes Arbeitszylinders (7, 8) vorgesehen sind, welche über ein elastisches Element, vorzugsweise eine Schraubenfeder, geschlossen gehalten sind.

11. Vorrichtung nach einem der Ansprüche 1 bis 10, dadurch gekennzeichnet, daß das oder jedes Steuerventil (12, 13), vorzugsweise auch der oder jeder Arbeitszylinder (7, 8), in einem gemeinsamen Gehäuse angeordnet sind, welches auch die Lager für die Drehwelle (6) beinhaltet und vorzugsweise mit dem auf dem Getriebegehäuse aufgeflanschten Schaltauslegergehäuse verbunden ist.

12. Vorrichtung nach einem der Ansprüche 1 bis 11, dadurch gekennzeichnet, daß das mechanische Schaltgestänge (S, Z) am Kolben zumindest eines Arbeitszylinders (7, 8) angreift.
